(19) Europäisches Patentamt
European Patent Office
Office européen des brevets

(11) **EP 1 346 543 B1**

(12) **EUROPEAN PATENT SPECIFICATION**

(45) Date of publication and mention
of the grant of the patent:
**05.09.2018   Bulletin 2018/36**

(51) Int Cl.:
***H04L 29/06*** *(2006.01)*      ***H04L 12/64*** *(2006.01)*

(21) Application number: **01981574.5**

(86) International application number:
**PCT/US2001/032098**

(22) Date of filing: **15.10.2001**

(87) International publication number:
**WO 2002/032054 (18.04.2002 Gazette 2002/16)**

(54) **DYNAMIC LATENCY MANAGEMENT AND DYNAMIC DRIFT CORRECTION**

DYNAMISCHE LATENZZEITVERWALTUNG, UND DYNAMISCHE ABWEICHUNGSKORREKTUR

GESTION DYNAMIQUE DU TEMPS D'ATTENTE ET CORRECTION DYNAMIQUE DE LA DÉRIVE

(84) Designated Contracting States:
**AT BE CH CY DE DK ES FI FR GB GR IE IT LI LU
MC NL PT SE TR**

(30) Priority: **13.10.2000   US 239917 P
30.04.2001   US 845083
30.04.2001   US 844656
30.04.2001   US 845084**

(43) Date of publication of application:
**24.09.2003   Bulletin 2003/39**

(73) Proprietor: **Facebook, Inc.
Menlo Park, CA 94025 (US)**

(72) Inventors:
• **MANTEGNA, John
Potomac Falls, VA 20165 (US)**
• **WU, Shuwu
Irvine, CA 92612 (US)**

(74) Representative: **Howe, Steven
Reddie & Grose LLP
The White Chapel Building
10 Whitechapel High Street
London E1 8QS (GB)**

(56) References cited:
**EP-A- 0 921 666      EP-A- 0 987 894
WO-A-95/22233      US-A- 5 825 771**

## Description

### TECHNICAL FIELD

The subject matter relates to the electronic communication of data.

### BACKGROUND

In real-time electronic communication, an important measure of quality is the length of time between sending data and the beginning of the actual playback of the data. The delay between the transfer of data from a remote source and the rendering of data is often known as end-to-end communication latency. Communication latency may affect both one-way communication, such as server-to-terminal streaming, and multipoint communication, such as Internet telephony.

Latency may interfere with true real-time communication by requiring the receiver of a communication to delay playback of the communication. In addition, data buffers may be required to store an advance supply of data to compensate for momentary transmission or processing delays. Some non-zero latency, however, may be tolerable and even necessary in real-time communication systems. For example, a small latency may be useful to compensate for physical constraints of some communication systems. Optimizing latency generally provides a better communication experience for the user.

Latency may result from a variety of sources, including audio recording buffer delay, transmission delay, receiving data buffer delay, and playback delay. Various transient conditions experienced during the communication setup and start/stop operations in both half-duplex and full-duplex modes may cause the receiving buffer delay to differ from an optimal delay. Start/stop operations generally are necessary even for full-duplex operations in order to use available bandwidth efficiently. For example, some systems use a voice detection algorithm to determine when to start and stop sending voice data packets.

In real-time audio communications that use a packet-switched internet, network-introduced latency is generally variable and unpredictable. This results in difficulties in predetermining an optimal size for a receiving data buffer that accommodates all situations.

The determination of an optimal size for a receiving data buffer may be further complicated by a temporal drift that may exist between the asynchronous recording and playback devices operating at different recording/playback speeds. This temporal drift may cause either steady buildup or steady depletion of the receiving data buffer, which, in turn, may result in the actual latency in a communication deviating from an optimal latency.

Document EP0921666 discloses a system for detecting and correcting jitter in a packet audio communication system. The state of the receiving buffer is monitored and buffered packets are added or dropped.

### SUMMARY

The invention is defined by a method according to independent claim 1, a computer program residing on a computer readable medium according to independent claim 8 and a computer system according to independent claim 9. Further embodiments are set out in the dependent claims.

In one general aspect, latency in a real-time electronic communication is dynamically managed. A communication delay arising from a receiving data buffer is measured and a latency adjustment necessary to adjust the size of the communication delay to within a predetermined range and an optimal range for a size of the communication delay are determined. Using these parameters, the number of samples for an audio playback data block passing through the receiving data buffer is increased or decreased.

Implementations may include one or more of the following features. For example, the number of samples may be modified without introducing audible artifacts. An instantaneous communication delay associated with the receiving data buffer may be measured, and, if measured multiple times, may be averaged over a time period. A number of samples to be inserted in or removed from the playback data block may be calculated and receiving data buffer delay upper and lower bounds may be determined.

Heuristic resampling of the audio playback data block may be performed. When heuristic resampling is performed, multiple consecutive samples of audio data in an audio buffer may be analyzed, consecutive samples with minimal variation in a parameter of their data may be identified, and the number of samples in the identified consecutive samples may be adjusted. A sample may be removed from or added to the identified consecutive samples.

In another general aspect, temporal drift correction is provided in a real-time audio communication system. A size of a receiving data buffer is measured and compared to a predetermined nominal data buffer size. An amount of temporal drift is characterized as a number of samples per audio playback data block based on the measured data buffer size and the nominal data buffer size. A number of samples to be inserted or removed for each audio playback data block to correct the temporal drift is determined, and the number of samples for each audio playback data block is modified.

Implementations may include one or more of the following features. For example, an instantaneous size of the receiving data buffer may be measured, and if measured multiple times, may be averaged over a time period.

Heuristic resampling of the audio playback data block may be performed. When heuristic resampling is performed, multiple consecutive samples of audio data in an audio buffer may be analyzed, consecutive samples with minimal variation in a parameter of their data may be identified, and the number of samples in the identified consecutive samples may be adjusted. A sample may be removed from or added to the identified consecutive samples.

The details of one or more implementations are set forth in the accompanying drawings and the description below.

## DESCRIPTION OF DRAWINGS

Fig. 1 is a flow chart illustrating an exemplary process for managing dynamic latency.

Fig. 2 is a flow chart illustrating an exemplary process for correcting temporal drift.

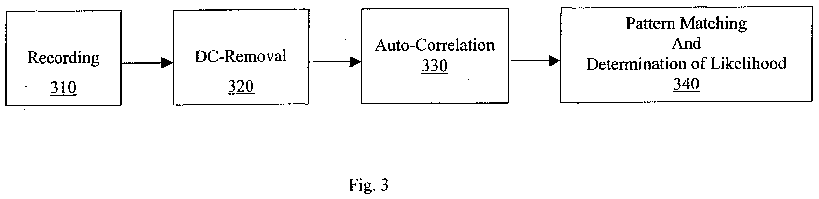

Fig. 3 is a flow chart illustrating an exemplary process for automatically detecting a microphone.

Fig. 4 is a block diagram illustrating an exemplary electronic communication system capable of achieving dynamic latency management, temporal drift correction and/or automatic microphone detection based on the processes described in Figs. 1-3.

## DETAILED DESCRIPTION

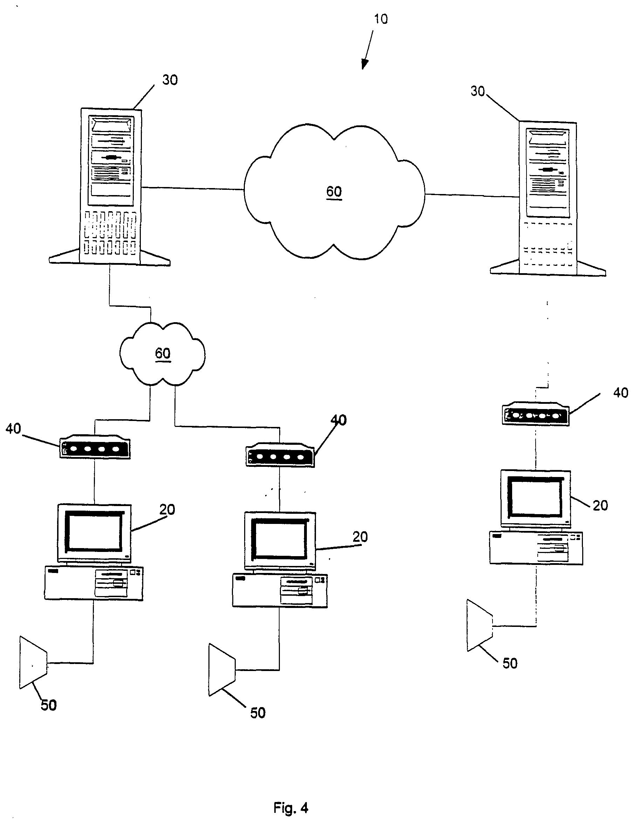

Referring to Fig. 4, an electronic communications system 10 capable of achieving dynamic latency correction, temporal drift correction and/or microphone detection is described. System 10 may include multiple computer systems, which may be client systems 20, connected together, either directly or through one or more server systems 30. Client systems may connect to server systems through a link 40 (e.g a modem a direct connection. Connections among multiple systems, whether client systems 20 or server systems 30, may form a network 60 (for example, an intranet, an internet (e.g., the Internet), a wide area network (WAN), a local area network (LAN), analog or digital wired and wireless telephone networks (for example, PSTN, ISDN, and xDSL)). Client systems and server systems 20 or 30 may exchange electronic data, such as, for example, audio data through the networks to which they are connected. Electronic data may be temporarily stored and preprocessed by a playback buffer when it is received by a computer system. Data received by a computer system may be played back either directly by the computer system, or on a peripheral device 50 connected to the system, such as, for example, as speaker for playing back audio data.

### Dynamic Latency Correction

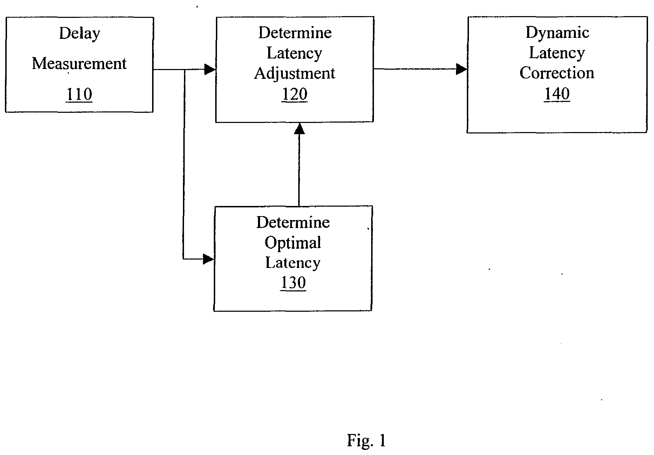

Referring to Fig. 1, dynamic latency management in a real-time electronic communications system may be achieved by determining the amount of data stored by the receiving data buffer (step 110), determining a latency correction amount with which to improve or optimize the communications link in the system (step 120), determining the target or optimal latency for the communications link (step 130), and adjusting the latency (step 140). A dynamic latency management system also may automatically correct temporal drifts that may exist in the communication link.

The amount of data stored in a buffer between receiving and playback circuitry may be indicative of delays or latencies introduced in a real-time communications system. Determining the amount of delay (step 110) based on the amount of data stored in the receiving data buffer (hereinafter, the buffer size) is a non-trivial matter in real-time audio communication systems, since the size of the buffer tends to fluctuate constantly during communication. That is, the size of the receiving buffer may fluctuate as data pass through the buffer because the data buffer size is generally determined by a relationship between two asynchronous processes - receiving data from the network and outputting data for playback. For applications involving unpredictable and jittery communication links (e.g., Internet telephony connections), snapshot measurements of the receiving data buffer size can vary greatly from one measurement to another. At least the latency due to buffer delays may be exacerbated in Internet-telephony applications over packet-switched networks, which generally require a substantial receiving data buffer delay to absorb transmission jitter.

Since audio playback data generally are stored in equal size blocks before latency correction, and since latency correction typically is small, near-periodic playback hardware interrupts may be used to measure the data buffer size. The buffer delay may be measured either periodically or near-periodically over a fixed temporal window (TW1) and then averaged over TW1. This averaging reduces the effects of transient network jitter and other conditions that otherwise result in transient fluctuations in the data buffer delay. The size of TW1 generally is small enough to reduce and/or minimize the amount of time required to perform dynamic latency management, yet generally is large enough to achieve the desired delay measurement accuracy. Thus, the buffer delay may be determined without requiring that the data packets be time-stamped.

To determine the amount by which latency must be adjusted (step 120), the average measured data buffer is compared to the target or optimal latency as defined by settable upper and lower bounds of the buffer delay. When the measured delay is out-of-bounds, the size of some or all of the stored data blocks may be adjusted to correct the latency or drift. Specifically, a non-zero latency adjustment may be calculated based on the amount of data samples to be inserted or removed from the data buffer or future data blocks to bring the delay or drift within bounds, and a subsequent correction then may be made. For example, the adjustment amount may be determined by multiplying the number of out-of-bounds samples by an empirically determined convergent factor. The adjustment amount may be normalized (e.g., by dividing by the nominal number of audio playback blocks in the audio buffer) to represent the number of samples to be inserted in or removed from each audio playback block.

An example of the process of determining the latency adjustment is illustrated below, as implemented using the following exemplary computer program:

```
If (AD > delay upper bound)
OBS = AD - (delay upper bound)
        If (AD < delay lower bound)
                OBS = AD - (delay lower bound)
        Else
                OBS = 0.0
        LD = CF * OBS /Nb,
```

where AD is the average measured delay in terms of samples, OBS is the number of out-of-bounds samples, CF is the convergent factor (the absolute value of which is greater than 1.0 to ensure convergence), Nb is the number of nominal audio playback blocks in the received data buffer, and LD is the latency adjustment in terms of the number of samples to be inserted or removed for each audio playback block (LD is positive if samples are to be removed and negative if samples are to be inserted).

For a given real-time audio communication link, it is possible to select an optimal operating range for the data buffer delay (i.e., optimal upper and lower bounds for the buffer delay) that theoretically permits communication with minimal delay, while simultaneously taking account of latency and drift in the link. Therefore, a predetermined optimal operating range may be used continuously. However, due to variations encountered in actual communication links, a predetermined optimal operating range may differ from the actual optimal operating range for a particular active communication link.

Therefore, rather than continuously using a predetermined optimal operating range, an optimal operating range may be determined (step 130) based on actual delays in the communication link that are measured over a time window (TW2) that is long enough to capture the complete cycle of high-to-low fluctuations in data buffer size. Multiple measured data buffer delays then may be used to determine the range of the delay fluctuations. Individual measured delays that are all substantially above zero indicate that the current upper and lower delay bounds are generally too high and should be decreased to reduce overall communication latency in the link. The measurement of zero delays during TW2 indicates that the upper and lower bounds should be increased to avoid communication gaps. In this manner, the difference between the upper bound and the lower bound is maintained at a level that is related to transient fluctuations of the data buffer delay. The modified upper and lower bounds then are used in the subsequent latency adjustment. Since this algorithm typically is used in conjunction with dynamic latency correction, the time window TW2 generally is greater than the time window TW1 used in the delay measurement.

In general, dynamic latency correction (step 140) is used to correct for any initial-condition-induced latency offset, intermediate periodic swings in latency, and/or long-term temporal drift, so that system latency is dynamically adjusted and maintained within the optimal range. Based on the number of samples to be inserted or removed, some or all of the stored or incoming audio playback blocks are modified, the size of each playback block is modified, and/or the number of playback blocks per defined period of time is modified. For example, a heuristic resampling technique may be applied to inaudibly insert or remove a specified number of samples from each audio playback block before the audio data are played back. Rather than using various stages of interpolation, decimation, and filtering, heuristic resampling exploits waveform properties to inaudibly insert or remove a small percentage of the samples. Although many possible implementations of heuristic resampling are possible, a simple exemplary implementation is provided to illustrate an application of this technique to speech samples. For example, groups of multiple consecutive samples (e.g., three) may be examined throughout the audio buffer. When an examined group of samples (e.g., three) is found to have minimal variance, the middle sample may be repeated to add a sample or deleted to subtract a sample. Upsampling preprocessing and downsampling postprocessing also may be used with heuristic resampling techniques to minimize audible artifacts in non-speech audio input.

**Temporal Drift Correction**

The above-described management of dynamic latency may be used to automatically correct general temporal drift occurring in a real-time audio communication system. More specialized techniques may be used to address specialized cases of temporal drift, such as for example, the case of a persistent temporal drift in a real-time audio communication system. Internet telephony may be especially sensitive to the effects of latency and drift, each of which may interfere with a user's ability to experience coherent spoken interaction. Due to the large number of manufacturers of different computer sound subsystems with varying temporal accuracy, the clocks used by two different sound subsystems may develop a large relative drift over time. Thus, a communication recorded by one device and played back by another device may experience a temporal drift. Without correction, the temporal drift may build up indefinitely, or may completely deplete the receiving data buffer, neither of which are acceptable conditions in a real-time communication system.

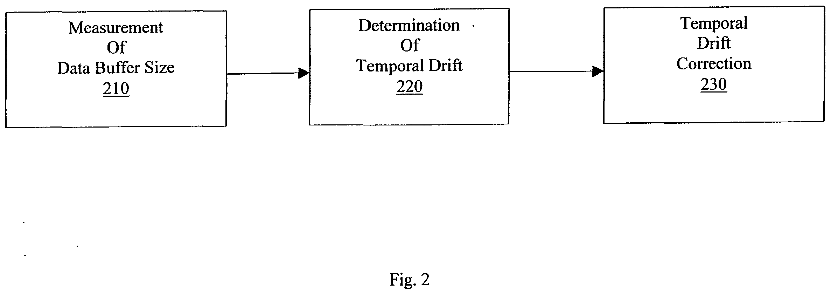

Referring to Fig. 2, a persistent temporal drift may be corrected by measuring the data buffer size (step 210), determining the amount of temporal drift (step 220), and correcting the temporal drift (step 230).

The measurement of the average receiving data buffer size (step 210) shares many aspects with the delay measurement (step 110) described above, in that the size of the delay buffer is measured multiple times over a time window and then averaged. To determine the temporal drift, the measured average buffer size for each playback block is compared to a predetermined nominal data buffer size. Then the temporal drift for each audio playback block is determined based on the difference in size divided by the nominal number of blocks in the data buffer. When multiplied by a convergent factor, it is possible to express the temporal drift for each playback block as:

$$TD[i] = CF * (AS[i] - Ns) / Nb, \qquad\qquad i = 0, 1, 2, \ldots,$$

where i is an index referring to a playback block, $AS[i]$ is the average data buffer size in samples for the $i^{th}$ playback block, $TD[i]$ is the temporal drift for the $i^{th}$ playback block, CF is a convergent factor greater than one, Ns is the nominal number of samples in the data buffer, and Nb is the number of nominal audio playback blocks in the data buffer. The temporal drift TD can be positive, zero, or negative. A positive value indicates that samples are to be removed, and a negative value indicates that samples are to be inserted. In general samples are inserted or removed on a block-by-block basis.

Once the amount of temporal drift is determined (step 220), it is used to determine the number of samples to be inserted or removed for each audio playback block (step 230). The techniques described above with respect to dynamic latency correction (step 140) may be applied to insert or remove an appropriate number of samples from some or all data blocks in order to correct temporal drift (step 230).

The techniques, methods, and systems described here may find applicability in a variety of computing or processing environments in which audio signals can be generated, copied, transmitted and played back or otherwise manipulated, and may be generalized to find applicability for the similar processing of video signals. Various implementations of the systems and techniques described here may be realized in digital electronic circuitry, or in computer hardware, firmware, software, or in combinations thereof. A system or other apparatus that uses one or more of the techniques and methods described here may be implemented as a computer-readable storage medium, configured with a computer program, where the storage medium so configured causes a computer system of one or more computers to operate on input and/or generate output in a specific and predefined manner. Such a computer system may include one or more programmable processors that receive data and instructions from, and transmit data and instructions to, a data storage system, and suitable input and output devices. Each computer program may be implemented in a high-level procedural or object-oriented programming language, or in assembly or machine language if desired; and in any case, the language may be a compiled or interpreted language. Suitable processors include, by way of example, both general and special purpose microprocessors.

Generally, one or more processors will receive instructions and data from one or more read-only memories and/or one or more random access memories. Storage devices suitable for tangibly embodying computer instructions and data include all forms of non-volatile memory, including semiconductor memory devices, such as EPROM, EEPROM, and flash memory devices; magnetic disks such as internal hard disks and removable disks; magneto-optical disks; and CD-ROM disks.

These elements also can be found in a conventional desktop or workstation computer as well as other computers suitable for executing computer programs implementing the methods described here, which can be used in conjunction with any software for rendering, manipulating or playing electronic communication data, including audio data. Any of the foregoing may be supplemented by, or implemented in, specially designed ASICs (application specific integrated circuits).

Other implementations are possible as long as they are within the scope of the following claims.

**Claims**

1. A method for dynamic latency management in a real-time electronic communication comprising:

measuring, at multiple times, an instantaneous communication delay arising from a receiving data buffer, over a first time window;
determining a communication delay by averaging the instantaneous communication delay measurements;
determining an optimal operating range for a communication delay by measuring delays experienced over a second time window, the second time window being longer than the first time window, and determining the optimal operating range including an upper and lower bound based on the measured delays;
comparing the determined communication delay with the optimal operating range for a communication delay;
if, based on the comparison, the determined communication delay is determined to be outside the upper or lower bounds of the optimal operating range, modifying a number of samples of a playback data block passing through the receiving data buffer to bring the communication delay to within the determined optimal operating range, wherein modifying the number of samples further comprises performing heuristic resampling of a playback data block.

2. The method of claim 1 wherein the number of samples is modified without introducing audible artefacts.

3. The method of claim 1 wherein determining an optimal operating range for a communication delay by measuring delays experienced over the second time window comprises:

decreasing the upper and lower bounds of an operating range conditioned on measuring individual delays that are all substantially above zero during the second time window; and
increasing the upper and lower bounds of the operating range conditioned on measuring zero individual delays during the second time window

4. The method of claim 1 wherein the real-time electronic communication includes an audio communication.

5. The method of claim 1 wherein performing heuristic resampling comprises:

analyzing multiple consecutive samples of audio data in the playback block;
identifying consecutive samples with minimal variation in a parameter of their data; and
adjusting the number of samples in the identified consecutive samples.

6. The method of claim 5 wherein adjusting the number of samples comprises removing a sample from the identified consecutive samples.

7. The method of claim 5 wherein adjusting the number of samples comprises adding a sample to the identified consecutive samples.

8. A computer program, residing on a computer-readable medium, for dynamically managing latency in a real-time electronic communication, comprising instructions, which when executed on a computer, cause the computer to perform the method according to any one of the preceding claims.

9. A computer system running programmed processes comprising a process for dynamically managing latency in a real-time electronic communication, which process causes the computer system to perform the method according to any one of claims 1 to 7.

**Patentansprüche**

1. Verfahren zur dynamischen Latenzzeitverwaltung in einer elektronischen Echtzeitkommunikation, das Folgendes beinhaltet:

Messen, zu mehreren Zeitpunkten, einer von einem Empfangsdatenpuffer entstehenden momentanen Kommunikationsverzögerung über ein erstes Zeitfenster;
Bestimmen einer Kommunikationsverzögerung durch Mitteln der momentanen Kommunikationsverzögerungsmesswerte;
Bestimmen eines optimalen Betriebsbereichs für eine Kommunikationsverzögerung durch Messen von über ein zweites Zeitfenster erfahrenen Verzögerungen, wobei das zweite Zeitfenster länger ist als das erste Zeitfenster, und Bestimmen des optimalen Betriebsbereichs einschließlich einer Ober- und Untergrenze auf der Basis der gemessenen Verzögerungen;
Vergleichen der bestimmten Kommunikationsverzögerung mit dem optimalen Betriebsbereich für eine Kommunikationsverzögerung;
Modifizieren, wenn auf der Basis des Vergleichs die bestimmte Kommunikationsverzögerung als außerhalb der Ober- oder Untergrenze des optimalen Betriebsbereichs liegend festgestellt wird, einer Anzahl von Samples eines durch den Empfangsdatenpuffer passierenden Wiedergabedatenblocks, um die Kommunikationsverzögerung in den bestimmten optimalen Betriebsbereich zu bringen, wobei das Modifizieren der Anzahl von Samples ferner das Durchführen eines heuristischen Neuabtastens eines Wiedergabedatenblocks beinhaltet.

2. Verfahren nach Anspruch 1, wobei die Anzahl von Samples ohne Einleiten von hörbaren Artefakten modifiziert wird.

3. Verfahren nach Anspruch 1, wobei das Bestimmen eines optimalen Betriebsbereichs für eine Kommunikationsverzögerung durch Messen von über das zweite Zeitfenster erfahrenen Verzögerungen Folgendes beinhaltet:

Verringern der Ober- und Untergrenze eines Betriebsbereichs vorbehaltlich des Messens individueller Verzögerungen, die während des zweiten Zeitfensters alle wesentlich über null liegen; und
Erhöhen der Ober- und Untergrenze des Betriebsbereichs vorbehaltlich des Messens von individuellen Verzögerungen während des zweiten Zeitfensters.

4. Verfahren nach Anspruch 1, wobei die elektronische Echtzeitkommuniktion eine Audiokommunikation beinhaltet.

5. Verfahren nach Anspruch 1, wobei das Durchführen von heuristischer Neuabtastung Folgendes beinhaltet:

Analysieren mehrerer aufeinander folgender Samples von Audiodaten in dem Wiedergabeblock;
Identifizieren konsekutiver Samples mit minimaler Variation in einem Parameter ihrer Daten; und
Justieren der Anzahl von Samples in den identifizierten konsekutiven Samples.

6. Verfahren nach Anspruch 5, wobei das Justieren der Anzahl von Samples das Entfernen eines Sample aus den identifizierten konsekutiven Samples beinhaltet.

7. Verfahren nach Anspruch 5, wobei das Justieren der Anzahl von Samples das Hinzufügen eines Sample zu den identifizierten konsekutiven Samples beinhaltet.

8. Computerprogramm, das sich auf einem computerlesbaren Medium befindet, zum dynamischen Verwalten von Latenzzeit in einer elektronischen Echtzeitkommunikation, das Befehle umfasst, die bei Ausführung auf einem Computer bewirken, dass der Computer das Verfahren nach einem der vorherigen Ansprüche durchführt.

9. Computersystem, das programmierte Prozesse abarbeitet, die einen Prozess zum dynamischen Verwalten von Latenzzeit in einer elektronischen Echtzeitkommunikation umfassen, wobei der Prozess bewirkt, dass das Computersystem das Verfahren nach einem der Ansprüche 1 bis 7 durchführt.

**Revendications**

1. Procédé de gestion dynamique de temps d'attente dans une communication électronique en temps réel, comprenant :

mesurer à des temps multiples, un retard instantané de communication provenant d'un tampon recevant des données, pendant une première fenêtre de temps ;

déterminer un retard de communication en faisant la moyenne des mesures de retards instantanés de communication ;

déterminer une plage opérationnelle optimale pour un retard de communication en mesurant des retards rencontrés pendant une deuxième fenêtre de temps, la deuxième fenêtre de temps étant plus longue que la première fenêtre de temps, et déterminer la plage opérationnelle optimale comprenant une limite supérieure et une limite inférieure sur la base des retards mesurés ;

comparer le retard de communication déterminé à la plage opérationnelle optimale pour un retard de communication ;

si, sur la base de la comparaison, le retard de communication déterminé est déterminé être hors de la limite supérieure ou inférieure de la plage opérationnelle optimale, modifier un nombre d'échantillons d'un bloc de données de reproduction passant à travers le tampon recevant des données dans le but d'amener le retard de communication dans la plage opérationnelle optimale déterminée, où modifier le nombre d'échantillons comprend en outre effectuer un rééchantillonnage heuristique d'un bloc de données de reproduction.

2. Procédé selon la revendication 1, dans lequel le nombre d'échantillons est modifié sans introduire des artefacts audibles.

3. Procédé selon la revendication 1, dans lequel déterminer une plage opérationnelle optimale pour un retard de communication en mesurant des retards rencontrés pendant la deuxième fenêtre de temps, comprend :

décroître la limite supérieure et la limite inférieure d'une plage opérationnelle conditionnée en mesurant des retards individuels qui sont sensiblement au-dessus de zéro pendant la deuxième fenêtre de temps ; et

accroître la limite supérieure et la limite inférieure d'une plage opérationnelle conditionnée en mesurant des retards individuels de zéro pendant la deuxième fenêtre de temps.

4. Procédé selon la revendication 1, dans lequel la communication électronique en temps réel comprend une communication audio.

5. Procédé selon la revendication 1, dans lequel effectuer un rééchantillonnage heuristique comprend :

analyser de multiples échantillons consécutifs de données audio dans le bloc de reproduction ;

identifier des échantillons consécutifs présentant une variation minimale dans un paramètre de leurs données ; et

ajuster le nombre d'échantillons dans les échantillons consécutifs identifiés.

6. Procédé selon la revendication 5, dans lequel ajuster le nombre d'échantillons comprend ajouter un échantillon des échantillons consécutifs identifiés.

7. Procédé selon la revendication 5, dans lequel ajuster le nombre d'échantillons comprend ajouter un échantillon aux échantillons consécutifs identifiés.

8. Programme informatique, résidant sur un support lisible par ordinateur, pour gérer dynamiquement un temps d'attente dans une communication électronique en temps réel, comprenant des instructions qui, lorsque exécutées sur un ordinateur, font que l'ordinateur mette en oeuvre le procédé selon l'une quelconque des revendications précédentes.

9. Système informatique passant des processus programmés comprenant un processus pour gérer dynamiquement un temps d'attente dans une communication électronique en temps réel, lequel processus fait que le système informatique mette en oeuvre le procédé selon l'une quelconque des revendications 1 à 7.

```
┌──────────────────┐      ┌──────────────────┐      ┌──────────────────┐
│      Delay       │      │    Determine     │      │     Dynamic      │
│                  │      │     Latency      │      │     Latency      │
│   Measurement    │─────▶│   Adjustment     │─────▶│    Correction    │
│                  │      │                  │      │                  │
│       110        │      │       120        │      │       140        │
└──────────────────┘      └──────────────────┘      └──────────────────┘
                                   ▲
                                   │
                          ┌──────────────────┐
                          │    Determine     │
                          │     Optimal      │
                          │     Latency      │
                          │                  │
                          │       130        │
                          └──────────────────┘
```

Fig. 1

```
┌─────────────────────┐      ┌─────────────────────┐      ┌─────────────────────┐
│    Measurement      │      │    Determination    │      │     Temporal        │
│        Of           │─────▶│        Of           │─────▶│       Drift         │
│  Data Buffer Size   │      │  Temporal Drift     │      │    Correction       │
│        210          │      │        220          │      │        230          │
└─────────────────────┘      └─────────────────────┘      └─────────────────────┘
```

Fig. 2

| Recording 310 | → | DC-Removal 320 | → | Auto-Correlation 330 | → | Pattern Matching And Determination of Likelihood 340 |
|---|---|---|---|---|---|---|

Fig. 3

Fig. 4

**EP 1 346 543 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0921666 A